(19) Europäisches Patentamt
European Patent Office
Office européen des brevets

(11) **EP 2 916 587 A1**

(12) **EUROPEAN PATENT APPLICATION**

(43) Date of publication:
**09.09.2015 Bulletin 2015/37**

(51) Int Cl.:
***H04W 36/00*** (2009.01)

(21) Application number: **14305316.3**

(22) Date of filing: **05.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT
92100 Boulogne-Billancourt (FR)**

(72) Inventors:
• **Gacanin, Haris
2018 Antwerpen (BE)**
• **Ramirez Gutierrez, Raymundo
2018 Antwerpen (BE)**

(74) Representative: **D'Halleweyn, Nele Veerle Trees Gertrudis et al
Arnold & Siedsma
Bezuidenhoutseweg 57
2594 AC The Hague (NL)**

(54) **System and method for generating a neighbour list**

(57) A system for generating a neighbour list of a serving cell having a plurality of neighbouring cells in a mobile wireless communication network, comprising: an obtaining unit configured for obtaining from said plurality of neighbouring cells signal strength parameters, representative for the signal strength of each neighbouring cell of said plurality of neighbouring cells, and frequency parameters, representative for the frequency used by each neighbouring cell of said plurality of neighbouring cells for sending signals from said plurality of neighbouring cells to the serving cell; a neighbour list generating unit configured for generating a neighbour list of said serving cell based on said obtained signal strength parameters of said plurality of neighbouring cells and said obtained frequency parameters of said plurality of neighbouring cells.

FIG 2

EP 2 916 587 A1

**Description**

Field of Invention

Embodiments of the invention relate to the field of neighbour list generation in mobile wireless communication networks, and in particular to systems and methods for generating a neighbour list of a serving cell having a plurality of neighbouring cells in a mobile wireless communication network.

Background

Self Organizing Networks (SON) are becoming a crucial factor for any telecom operator to reduce rollout time or optimize the real-time performance of their networks. The explosive growth in mobile data and voice traffic has put significant load on operator's existing Radio Access Network (RAN) infrastructures. Studies on wireless communication usage show that more than 50% of all voice calls and more than 70% of all data usages originate from subscriber's home.

Generally, indoor coverage is characterized by call drops and bad customer experience. In addition high demanding data applications require more bandwidth that is unachievable in the traditional wireless networks design. To be competitive operators have to reduce their operational expenses by reducing the cost per mobile data bit. As a result, operators have flattened their network architecture as per 3GPP recommendations. Operators have introduced eNodeBs (LTE Base Stations) in the macro cellular networks and Home eNodeBs or femto access points (FAPs) in the subscriber's home network to provide a higher quality of service (QoS). Neighbouring FAPs however or cells in general can impact and degrade user experience if handover and interference are not properly managed.

Summary

The object of embodiments of the invention is to improve neighbour list generation for cell handover while reducing interference effects from neighbouring cells.

According to an aspect of the invention there is provided a system for generating a neighbour list of a serving cell having a plurality of neighbouring cells in a mobile wireless communication network. The system comprises an obtaining unit configured for obtaining from said plurality of neighbouring cells signal strength parameters, representative for the signal strength of each neighbouring cell of said plurality of neighbouring cells, and frequency parameters, representative for the frequency used by each neighbouring cell of said plurality of neighbouring cells for sending signals from said plurality of neighbouring cells to the serving cell. The system further comprises a neighbour list generating unit configured for generating a neighbour list of said serving cell based on said obtained signal strength parameters of said plurality of neighbouring cells and said obtained frequency parameters of said plurality of neighbouring cells.

In a preferred embodiment, signal strength parameters of the serving cell and neighbouring cells are measured by a (UE) and the signal strength data are then reported to the serving cell.

By taking into account the frequency used by the neighbouring cells, it is possible to reduce interference problems. If only the signal strength is considered for generating a neighbour list, interference originating from neighbouring cells using the same frequency as the serving cell may have a severe impact on user QoS.

In an embodiment the obtaining unit is configured for obtaining from said plurality of neighbouring cells location parameters, allowing to determine distance parameters representative for the distance between the serving cell and each neighbouring cell of said plurality of neighbouring cells. In such an embodiment the neighbour list generating unit is configured for generating the neighbour list of said serving cell further based on said distance parameters of said plurality of neighbouring cells. By taking into account the distance temporary problems with the signal strength may be recognized. In an exemplary situation where the signal strength of a neighbouring cell, located very close to the serving cell, is (temporarily) lowered e.g. due to the presence of an obstacle, that neighbouring cell should not automatically be eliminated as a good neighbour. By using also distance parameters for generating a neighbour list, such situations can be covered.

According to an embodiment the location parameters of said plurality of neighbouring cells are GPS coordinates.

In another embodiment the obtained signal strength parameters may be used for determining the distance between a neighbouring cell and the serving cell. E.g. the distance may be derived from signal strength parameters obtained of a longer period of time, so that temporary signal strength problems are averaged out or can be removed and an accurate distance calculations may be performed.

According to an embodiment the neighbour list generating unit is configured for selecting a first set of cells from said plurality of neighbouring cells of said serving cell based on said obtained signal strength parameters of said plurality of neighbouring cells. The neighbour list generating unit is further configured for selecting a second set of cells from said plurality of neighbouring cells of said serving cell based on said obtained frequency parameters of said plurality of neighbouring cells. Finally the neighbour list generating unit is configured for generating a neighbour list of said serving cell based on said first and second sets of cells selected from said plurality of neighbouring cells.

In an embodiment the neighbour list generating unit is configured for selecting a third set of cells from said plurality of neighbouring cells of said serving cell based on said obtained signal strength parameters, frequency parameters and location parameters of said plurality of neighbouring cells and generating a neighbour list of said serving cell based on said first, second and third sets of cells selected from said plurality of neighbouring cells.

According to an embodiment the obtaining unit is configured for requesting a physical cell indicator (PCI) of each neighbouring cell of said plurality of neighbouring cells and deriving therefrom the frequency parameters of each neighbouring cell of said plurality of neighbouring cells.

In a preferred embodiment the signal strength parameters of said plurality of neighbouring cells are received signal strength indicators (RSSI). In such an embodiment the RSSI or signal strength parameters of the serving cell and of any neighbouring cell are measured by the UE and then reported to the serving cell. Another parameter that might be measured by the UE and reported to the serving cell is a reference signal received power (RSRP).

According to an embodiment the neighbour list generating unit is configured to select the first set of cells by including a neighbouring cell in said first set if the signal strength parameter is higher than a predefined signal strength threshold value for said neighbouring cell. The neighbour list generating unit is further configured to select the second set of cells by including a neighbouring cell in said second set if the frequency used by said neighbouring cell is equal to the frequency used by the serving cell.

In an embodiment the neighbour list generating unit is configured to select the third set of cells by including a neighbouring cell in said third set if the signal strength parameter is lower than the predefined signal strength threshold value for said neighbouring cell or the frequency used by said neighbouring cell is equal to the frequency used by the serving cell. An extra criterion for the neighbouring cell to be included in said third set is that the distance between the serving cell and said neighbouring cell is below a predefined distance threshold value.

According to an embodiment the neighbour list generating unit is configured for selecting from the first selected set of cells those cells which are not included in the second selected set of cells and adding to said selected set of cells the cells which are included in the third selected set of cells to form the neighbour list.

According to another aspect of the invention there is provided a method for generating a neighbour list of a serving cell having a plurality of neighbouring cells in a mobile wireless communication network. The method comprises obtaining from said plurality of neighbouring cells signal strength parameters, representative for the signal strength of each neighbouring cell of said plurality of neighbouring cells, and frequency parameters, representative for the frequency used by each neighbouring cell of said plurality of neighbouring cells for sending signals from said plurality of neighbouring cells to the serving cell. The method further comprises selecting a first set of cells from said plurality of neighbouring cells of said serving cell based on said obtained signal strength parameters of said plurality of neighbouring cells and selecting a second set of cells from said plurality of neighbouring cells of said serving cell based on said obtained frequency parameters of said plurality of neighbouring cells. The method finally comprises calculating a neighbour list of said serving cell based on said first and second sets of cells selected from said plurality of neighbouring cells.

In an embodiment the method comprises obtaining from said plurality of neighbouring cells location parameters, allowing determining distance parameters representative for the distance between the serving cell and each neighbouring cell of said plurality of neighbouring cells. The method further comprised selecting a third set of cells from said plurality of neighbouring cells of said serving cell based on said obtained signal strength, frequency and distance parameters of said plurality of neighbouring cells. Finally, the method comprises calculating a neighbour list of said serving cell based on said first, second and third sets of cells selected from said plurality of neighbouring cells.

According to a preferred embodiment the location parameters of said plurality of neighbouring cells are GPS coordinates.

In an embodiment the method comprises requesting a physical cell indicator (PCI) of each neighbouring cell of said plurality of neighbouring cells and deriving therefrom the frequency parameters of each neighbouring cell of said plurality of neighbouring cells.

In a preferred embodiment the signal strength parameters of said plurality of neighbouring cells are received signal strength indicators (RSSI). In such an embodiment the RSSI or signal strength parameters of the serving cell and of any neighbouring cell are measured by the UE and then reported to the serving cell. Another parameter that might be measured by the UE and reported to the serving cell is a reference signal received power (RSRP).

According to an embodiment the method comprises selecting the first set of cells by including a neighbouring cell in said first set if the signal strength parameter is higher than a predefined signal strength threshold value for said neighbouring cell. The method further comprises selecting the second set of cells by including a neighbouring cell in said second set if the frequency used by said neighbouring cell is equal to the frequency used by the serving cell.

In an embodiment the method comprises selecting the third set of cells by including a neighbouring cell in said third set if the signal strength parameter is lower than the predefined signal strength threshold value for said neighbouring cell or the frequency used by said neighbouring cell is equal to the frequency used by the serving cell. An extra criterion for including the neighbouring cell in said third set is that the distance between the serving cell and said neighbouring cell is below a predefined distance threshold value.

According to an embodiment calculating the neighbour list comprises selecting from the first selected set of cells those cells which are not included in the second selected set of cells and adding to said selected set of cells the cells which are included in the third selected set of cells to form the neighbour list.

It is noted that other parameters, if available, can also be used to improve neighbour list selection such as e.g. statistical parameters with regards to handover failures.

According to a further aspect of the invention, there is provided a computer program comprising computer-executable instructions to perform the method, when the program is run on a computer, according to any one of the steps of any one of the embodiments disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 illustrates schematically an exemplary embodiment of a system according to the invention;
Figure 2 illustrates schematically an embodiment of a method according to the invention using a block diagram; and
Figure 3 illustrates schematically an exemplary architecture in which embodiments of the invention can be used.

Description of embodiments

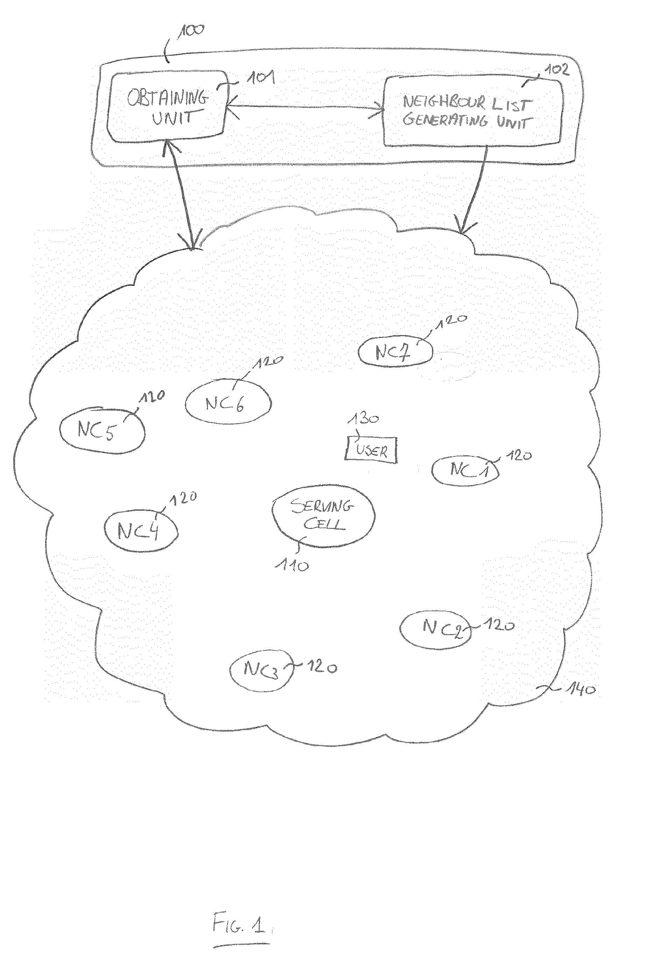

Figure 1 illustrates a system 100 for generating a neighbour list of a serving cell 110 having a plurality of neighbouring cells 120 in a mobile wireless communication network 140. The system comprises an obtaining unit 101 configured for obtaining from said plurality of neighbouring cells signal strength parameters, representative for the signal strength of each neighbouring cell of said plurality of neighbouring cells, and frequency parameters, representative for the frequency used by each neighbouring cell of said plurality of neighbouring cells for sending signals from said plurality of neighbouring cells to the serving cell. These signal strength parameters of the plurality of neighbouring cells can for example be RSSI values. A possible manner to obtain the frequency parameters is that the obtaining unit is configured for requesting a physical cell indicator (PCI) of each neighbouring cell of said plurality of neighbouring cells and deriving therefrom the frequency parameters of each neighbouring cell of said plurality of neighbouring cells.

The system further comprises a neighbour list generating unit 102 configured for generating a neighbour list of said serving cell based on said obtained signal strength parameters of said plurality of neighbouring cells and said obtained frequency parameters of said plurality of neighbouring cells.

For the plurality of neighbouring cells in figure 1, obtained signal strength parameters (column SSP) and frequency parameters (column FP) are shown in table 1. The values used here are arbitrary. As mentioned above, these parameters are representative for the signal strength of each neighbouring cell and for the frequency used by the cells for sending signals. It is noted that for example the signal strength parameters could also be used to extrapolate the distance between a neighbouring cell and the serving cell. However due to possible obstacles between the cells, this method of determining the distance between a neighbouring cell and the serving cell can be prone to error.

Table 1

| Cell | SSP | FP | DP |
|------|-----|-----|-----|
| SC | | 3 | |
| NC1 | 70 | 1 | 102 |
| NC2 | 80 | 3 | 55 |
| NC3 | 100 | 2 | 306 |
| NC4 | 90 | 1 | 121 |
| NC5 | 60 | 1 | 36 |
| NC6 | 85 | 2 | 97 |
| NC7 | 50 | 3 | 210 |

In a preferred embodiment the obtaining unit 101 is further configured for obtaining from said plurality of neighbouring cells location parameters, allowing to determine distance parameters representative for the distance between the serving cell and each neighbouring cell of said plurality of neighbouring cells. In table 1 arbitrary distance parameters (DP column) are shown. Accordingly, the neighbour list generating unit can be configured for generating the neighbour list of said serving cell further based on said distance parameters of said plurality of neighbouring cells. The location parameters can for example be GPS coordinates obtained through TR-262 components of the cells, in the case of femtocells.

In an exemplary embodiment the neighbour list generating unit 102 is configured for selecting a first set of cells from said plurality of neighbouring cells of said serving cell based on said obtained signal strength parameters of said plurality of neighbouring cells. This first set can be selected by including a neighbouring cell in said first set if the signal strength parameter is higher than a predefined signal strength threshold value for said neighbouring cell. This first set is referred to as "neighbours by signal strength" or NSS and is defined as:

$$\mathrm{NSS} = \{NC_i \in NL : SS_i \geq TSS\},$$

wherein $1 \leq i \leq M$, and M is the total amount of neighbouring cells of the serving cell (in a predefined neighbour list NL), $NC_i$ is the $i$th neighbouring cell of the serving cell and $SS_i$ is the accompanied signal strength of the $i$th neighbouring cell that is compared with a predefined signal strength threshold value $TSS$.

The neighbour list generating unit may be further configured for selecting a second set of cells from said plurality of neighbouring cells of said serving cell based on said obtained frequency parameters of said plurality of neighbouring cells. This second set can be selected by including a neighbouring cell in said second set if the frequency used by said neighbouring cell is equal to the frequency used by the serving cell. This second set is referred to as "neighbours by frequency" or NF and is defined as:

$$\mathrm{NF} = \{NC_j \in NSS : f_j \equiv F_S\},$$

wherein $1 \leq j \leq N$, and N is the total amount of neighbouring cells in NSS. $f_j$ is the frequency used by the $j$th neighbouring cell and $F_S$ is the frequency used by the serving cell.

The neighbour list generating unit 102 may also be configured for selecting a third set of cells from said plurality of neighbouring cells of said serving cell based on said obtained signal strength parameters, frequency parameters and location parameters of said plurality of neighbouring cells. This third set can be selected by including a neighbouring cell in said third set if the signal strength parameter is lower than the predefined signal strength threshold value for said neighbouring cell or the frequency used by said neighbouring cell is equal to the frequency used by the serving cell and the distance between the serving cell and said neighbouring cell is below a predefined distance threshold value. This third set is referred to as "neighbours by joint collaboration" or NJC and is defined as:

$$\mathrm{NJC} = \{NC_i \in NL : [(SS_i \leq TSS_1) \vee (f_i \equiv F_T)] \wedge (d_i \leq D_T)\},$$

wherein $d_i$ is the distance between the $i$th neighbouring cell $NC_i$ and the serving cell and $D_T$ is the predefined distance threshold value.

The neighbour list generating unit is configured for generating the final neighbour list by selecting from the first selected set of cells NSS those cells which are not included in the second selected set of cells NF and adding to said selected set of cells the cells which are included in the third selected set of cells NJC. This generated final neighbour list FNL can be written function of the three selected sets of neighbouring cells NSS, NF and NJC as: *FNL = (NSS ⊖ NF) u NJC.*

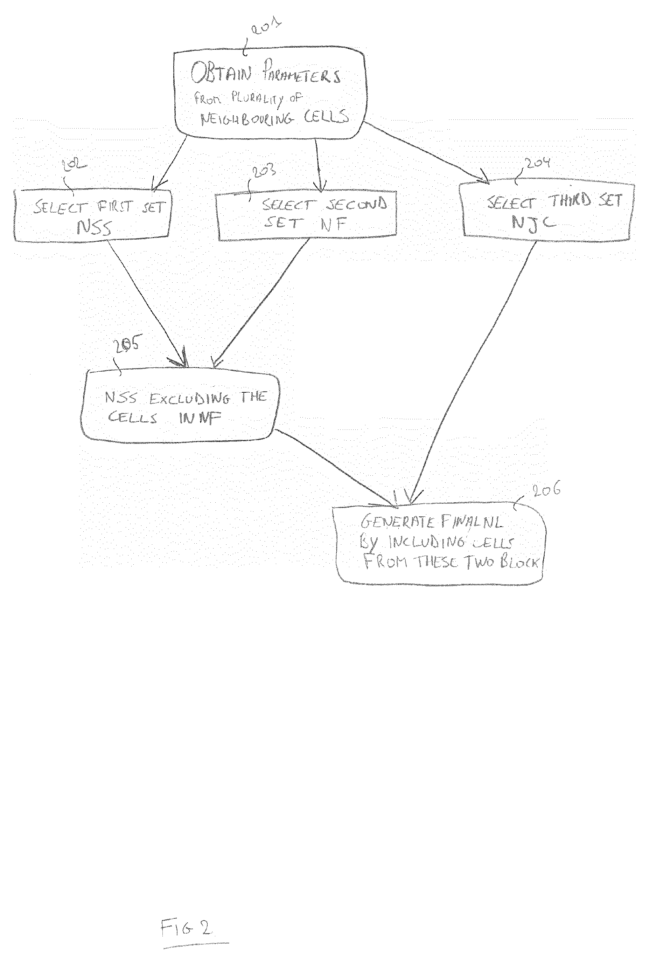

The block diagram in figure 2 illustrates schematically a method for generating a neighbour list of a serving cell having a plurality of neighbouring cells in a mobile wireless communication network. A first step 201 comprises obtaining from said plurality of neighbouring cells signal strength parameters, representative for the signal strength of each neighbouring cell of said plurality of neighbouring cells, and frequency parameters, representative for the frequency used by each neighbouring cell of said plurality of neighbouring cells for sending signals from said plurality of neighbouring cells to the serving cell. It is noted that from the obtained signal strength parameters also other parameters can be deducted such as the distance between the serving cell and a neighbouring cell of said plurality of neighbouring cells. However it is possible that extra parameters such as location parameters, allowing to determine distance parameters representative for the distance between the serving cell and each neighbouring cell of said plurality of neighbouring cells are obtained from the network explicitly.

The next step 202 is selecting a first set of cells from said plurality of neighbouring cells of said serving cell based on said obtained signal strength parameters of said plurality of neighbouring cells followed by step 203 which is to select a second set of cells (NF) from said plurality of neighbouring cells of said serving cell based on said obtained frequency parameters of said plurality of neighbouring cells. The first set can be selected by including a neighbouring cell in said first set if the signal strength parameter is higher than a predefined signal strength threshold value for said neighbouring cell. This first set is referred to as "neighbours by signal strength" or NSS and is defined as:

$$ NSS = \{NC_i \in NL : SS_i \geq TSS\}, $$

wherein $1 \leq i \leq$ M, and M is the total amount of neighbouring cells of the serving cell (in a predefined neighbour list NL), $NC_i$ is the $i$th neighbouring cell of the serving cell and $SS_i$ is the accompanied signal strength of the $i$th neighbouring cell that is compared with a predefined signal strength threshold value $TSS$. The second set can be selected by including a neighbouring cell in said second set if the frequency used by said neighbouring cell is equal to the frequency used by the serving cell. This second set is referred to as "neighbours by frequency" or NF and is defined as:

$$ NF = \{NC_j \in NSS : f_j \equiv F_S\}, $$

wherein $1 \leq j \leq$ N, and N is the total amount of neighbouring cells in NSS. $f_j$ is the frequency used by the jth neighbouring cell and $F_s$ is the frequency used by the serving cell.

When distance parameters are available, a third set of cells from said plurality of neighbouring cells of said serving cell is selected based on said obtained signal strength, frequency and distance parameters of said plurality of neighbouring cells, see step 204. The third set can be selected by including a neighbouring cell in said third set if the signal strength parameter is lower than the predefined signal strength threshold value for said neighbouring cell or the frequency used by said neighbouring cell is equal to the frequency used by the serving cell and the distance between the serving cell and said neighbouring cell is below a predefined distance threshold value. This third set is referred to as "neighbours by joint collaboration" or NJC and is defined as:

$$ NJC = \{NC_i \in NL : [(SS_i \leq TSS_1) \vee (f_i \equiv F_T)] \wedge (d_i \leq D_T)\}, $$

wherein $d_i$ is the distance between the $i$th neighbouring cell $NC_i$ and the serving cell and $D_T$ is the predefined distance threshold value.

Generating the neighbour list is the final step and comprises selecting from the first selected set of cells those cells which are not included in the second selected set of cells as shown in step 205 and adding to said selected set of cells the cells which are included in the third selected set of cells to form the neighbour list as shown in step 206.

A numerical example is given to clarify the method described in the above mentioned embodiment. From the parameters in table 1 we can determine signal strength (in dBm), frequency (arbitrary units) and distance (arbitrary units) from seven neighbouring cells of the serving cell. Following thresholds and parameters are assumed (also see table 2):
- $TSS_0$ = -90 dBm
- TSS = -75 dBm
- $D_T$ = 6
- $1 \leq i \leq 7$

Table 2

| Cell | Signal strength (dBm) | Frequency | Distance |
|------|----------------------|-----------|----------|
| SC | | 3 | |
| NC1 | -70 | 1 | 8 |
| NC2 | -80 | 3 | 12 |
| NC3 | -100 | 2 | 3 |
| NC4 | -90 | 1 | 4 |

(continued)

| Cell | Signal strength (dBm) | Frequency | Distance |
|------|----------------------|-----------|----------|
| NC5 | -60 | 1 | 6 |
| NC6 | -85 | 2 | 4 |
| NC7 | -50 | 3 | 2 |

The $TSS_0$ threshold value of -90 dBm is the value that for example would be used for determining the neighbour list NL only by taking into account the signal strength of the neighbouring cells as is done in the prior art. This would result in the following neighbour list:

$$NL=\{NC1, NC2, NC4, NC5, NC6, NC7\}.$$

Only NC3 is excluded from the NL due to its low signal strength of -100 dBm.

However according to the exemplary embodiment above, the first step for calculating the final neighbour list FNL is selecting the two sets NSS (step 202) and NF (step 203) from the seven neighbouring cells. Using the values of table 2 and the signal strength threshold TSS of -75 dBm (which is typically larger than the $TSS_0$ threshold) the following sets are selected:

$$NSS=\{NC1, NC5, NC7\} \text{ and } NF = \{NC7\}.$$

The next step is selecting the third set NJC (step 204):

$$NJC=\{[\{NC2, NC3, NC4, NC6\}\vee\{NC2, NC7\}]\wedge\{NC3, NC4, NC5, NC6, NC7\}\} =\{NC3, NC4, NC6, NC7\}$$

From the three sets NSS, NF and NJC the final neighbour list FNL is generated (step 205 and 206):

$$NFL=\{NC1, NC3, NC4, NC5, NC6, NC7\}$$

Comparing the NFL with the NL that would have been generated using prior art methods it is concluded that NC2 is excluded from the FNL due to two reasons. The distance to the serving cell is very large and additionally NC2 uses the same frequency as the serving cell. These two factors would increase the interference and impact QoS. NC7, which also has the same frequency as the serving cell, is included in the FNL because it is located very close to the serving cell and has a high signal strength. Lastly it is noted that, despite of its low signal strength, NC3 is included in the FNL because its location close to the serving cell and its favourable frequency.

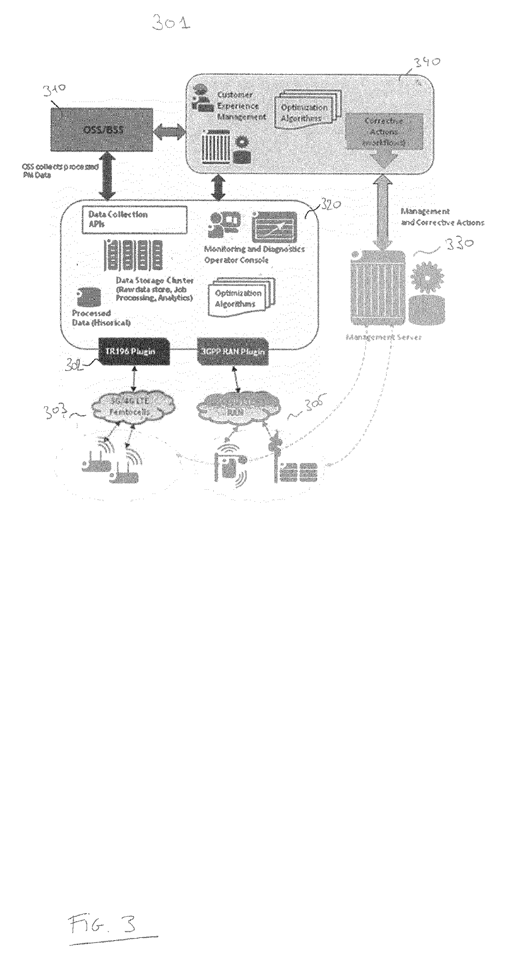

Figure 3 illustrates schematically an architecture in which embodiments of the invention may be used. It comprises a network management system 301 which uses TR-069 protocol to configure TR-196 FAP service object parameters 302 within a FAP network 303. The illustrated management system also provides in RAN management with respect to 3G, 4G and LTE networks 305. The management system further comprises three main units under supervision of an OSS/BSS unit 310; a data monitoring unit 320, a management server unit 330 and a customer experience management unit 340. Embodiments of the invention can be incorporated into this management system 310, 320, 330, 340 to improve the present algorithms and workflows for neighbour list generation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A system for generating a neighbour list of a serving cell having a plurality of neighbouring cells in a mobile wireless communication network, comprising:

   - an obtaining unit configured for obtaining from said plurality of neighbouring cells
   signal strength parameters, representative for the signal strength of each neighbouring cell of said plurality of neighbouring cells, and
   frequency parameters, representative for the frequency used by each neighbouring cell of said plurality of neighbouring cells for sending signals from said plurality of neighbouring cells to the serving cell;
   - a neighbour list generating unit configured for generating a neighbour list of said serving cell based on said obtained signal strength parameters of said plurality of neighbouring cells and said obtained frequency parameters of said plurality of neighbouring cells.

2. The system of claim 1, wherein

   - the obtaining unit is configured for obtaining from said plurality of neighbouring cells
   location parameters, allowing to determine distance parameters representative for the distance between the serving cell and each neighbouring cell of said plurality of neighbouring cells; and
   - the neighbour list generating unit is configured for generating the neighbour list of said serving cell further based on said distance parameters of said plurality of neighbouring cells.

3. The system of claim 2, wherein the location parameters of said plurality of neighbouring cells are GPS coordinates.

4. The system of any one of the previous claims, wherein the neighbour list generating unit is configured for selecting a first set of cells from said plurality of neighbouring cells of said serving cell based on said obtained signal strength parameters of said plurality of neighbouring cells; and
   selecting a second set of cells from said plurality of neighbouring cells of said serving cell based on said obtained frequency parameters of said plurality of neighbouring cells; and
   generating a neighbour list of said serving cell based on said first and second sets of cells selected from said plurality of neighbouring cells.

5. The system of claim 2 or 3 and 4, wherein the neighbour list generating unit is configured for selecting a third set of cells from said plurality of neighbouring cells of said serving cell based on said obtained signal strength parameters, frequency parameters and location parameters of said plurality of neighbouring cells; and
   generating a neighbour list of said serving cell based on said first, second and third sets of cells selected from said plurality of neighbouring cells.

6. The system of any of the claims 4 or 5, wherein the neighbour list generating unit is configured to: select the first set of cells by including a neighbouring cell in said first set if the signal strength parameter is higher than a predefined signal strength threshold value for said neighbouring cell; and
select the second set of cells by including a neighbouring cell in said second set if the frequency used by said neighbouring cell is equal to the frequency used by the serving cell.

7. The system of claim 5 and 6, wherein the neighbour list generating unit is configured to select the third set of cells by including a neighbouring cell in said third set if
the signal strength parameter is lower than the predefined signal strength threshold value for said neighbouring cell or the frequency used by said neighbouring cell is equal to the frequency used by the serving cell; and
the distance between the serving cell and said neighbouring cell is below a predefined distance threshold value.

8. The system of claim 7 wherein the neighbour list generating unit is configured for
selecting from the first selected set of cells those cells which are not included in the second selected set of cells; and adding to said selected set of cells the cells which are included in the third selected set of cells to form the neighbour list.

9. The system of any of the previous claims, wherein the obtaining unit is configured for requesting a physical cell indicator (PCI) of each neighbouring cell of said plurality of neighbouring cells and deriving therefrom the frequency parameters of each neighbouring cell of said plurality of neighbouring cells.

10. The system of any of the previous claims, wherein the signal strength parameters of said plurality of neighbouring cells are received signal strength indicators (RSSI).

11. A method for generating a neighbour list of a serving cell having a plurality of neighbouring cells in a mobile wireless communication network, comprising:

   - obtaining from said plurality of neighbouring cells signal strength parameters, representative for the signal strength of each neighbouring cell of said plurality of neighbouring cells, and frequency parameters, representative for the frequency used by each neighbouring cell of said plurality of neighbouring cells for sending signals from said plurality of neighbouring cells to the serving cell;
   - selecting a first set of cells from said plurality of neighbouring cells of said serving cell based on said obtained signal strength parameters of said plurality of neighbouring cells; and
   - selecting a second set of cells from said plurality of neighbouring cells of said serving cell based on said obtained frequency parameters of said plurality of neighbouring cells;
   - generating a neighbour list of said serving cell based on said first and second sets of cells selected from said plurality of neighbouring cells.

12. The method of claim 11, comprising:

   - obtaining from said plurality of neighbouring cells location parameters, allowing to determine distance parameters representative for the distance between the serving cell and each neighbouring cell of said plurality of neighbouring cells; and
   - selecting a third set of cells from said plurality of neighbouring cells of said serving cell based on said obtained signal strength, frequency and distance parameters of said plurality of neighbouring cells; and
   - generating a neighbour list of said serving cell based on said first, second and third sets of cells selected from said plurality of neighbouring cells.

13. The method of claim 12, wherein the location parameters of said plurality of neighbouring cells are GPS coordinates.

14. The method of any of the claims 11-13, comprising requesting a physical cell indicator (PCI) of each neighbouring cell of said plurality of neighbouring cells and deriving therefrom the frequency parameters of each neighbouring cell of said plurality of neighbouring cells.

15. A computer program comprising computer-executable instructions to perform the method, when the program is run on a computer, of any one of the claims 11-14.

FIG. 1

FIG 2

301

340

310

OSS/BSS

Customer
Experience
Management

Optimization
Algorithms

Corrective
Actions
(workflow)

OSS collects process and
PM Data

Management
and Corrective Actions

Data Collection
APIs

320

Monitoring and Diagnostics
Operator Console

Data Storage Cluster
(Raw data store, Job
Processing, Analytics)

330

Processed
Data (Historical)

Optimization
Algorithms

302

TR196 Plugin

3GPP RAN Plugin

Management Server

303

3G/4G LTE
Femtocells

RAN

306

FIG. 3

**EUROPEAN SEARCH REPORT**

Europäisches
Patentamt
European
Patent Office
Office européen
des brevets

Application Number

EP 14 30 5316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/244718 A1 (LEE JUNG SEUNG [KR] ET AL) 19 September 2013 (2013-09-19) * abstract; figures 1,3 * * paragraphs [0008], [0009], [0027], [0030], [0033], [0041] - [0069] * ----- | 1-15 | INV. H04W36/00 |
| X | US 2013/079007 A1 (NAGARAJA SUMEETH [US] ET AL) 28 March 2013 (2013-03-28) | 1,11,15 | |
| A | * abstract * * paragraphs [0090] - [0101] * ----- | 2-10, 12-14 | |
| A | "Neighbor List Update in SON ; C80216m-08_1382", IEEE DRAFT; C80216M-08_1382, IEEE-SA, PISCATAWAY, NJ USA, vol. 802.16m, 31 October 2008 (2008-10-31) , pages 1-7, XP017634265, [retrieved on 2008-10-31] * page 4, lines 10-13 * * page 5, lines 1-9 * * page 6, lines 5-15 * ----- | 1-15 | |
| A | US 2013/337778 A1 (YE YINGHUA [US] ET AL) 19 December 2013 (2013-12-19) * abstract * * paragraphs [0009] - [0030], [0034], [0035], [0070] - [0073] * ----- | 1-15 | TECHNICAL FIELDS SEARCHED (IPC) H04W |

The present search report has been drawn up for all claims

| Place of search | Date of completion of the search | Examiner |
|---|---|---|
| Munich | 30 October 2014 | Patras, Paula Larisa |

EPO FORM 1503 03.82 (P04C01)

**ANNEX TO THE EUROPEAN SEARCH REPORT
ON EUROPEAN PATENT APPLICATION NO.**

EP 14 30 5316

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2014

| Patent document cited in search report | | | Publication date | Patent family member(s) | | Publication date |
|---|---|---|---|---|---|---|
| US 2013244718 | A1 | | 19-09-2013 | NONE | | |
| US 2013079007 | A1 | | 28-03-2013 | TW | 201246960 A | 16-11-2012 |
| | | | | US | 2013079007 A1 | 28-03-2013 |
| | | | | WO | 2012135121 A1 | 04-10-2012 |
| US 2013337778 | A1 | | 19-12-2013 | CN | 103392360 A | 13-11-2013 |
| | | | | EP | 2681948 A1 | 08-01-2014 |
| | | | | US | 2013337778 A1 | 19-12-2013 |
| | | | | WO | 2012116741 A1 | 07-09-2012 |

EPO FORM P0459